# EUROPÄISCHE PATENTANMELDUNG

(11) **EP 0 781 063 A2**
(43) Veröffentlichungstag der Anmeldung: **25.06.1997**
(21) Anmeldenummer: 96119027.9
(22) Anmeldetag: 27.11.1996
(51) Int. Cl.: H04Q 7/32

(54) **Verfahren und Anordnung zum Erzeugen von Zufallszahlen in Telekommunikationsgeräten eines drahtlosen Telekommunikationssystems**

(30) Priorität: 21.12.1995 DE 19548044
(71) Anmelder: SIEMENS AKTIENGESELLSCHAFT, 80333 München (DE)
(72) Erfinder: Euscher, Christoph, Dipl.-Ing., 46414 Rhede (DE); Müller, Andreas, Dipl.-Ing., 46459 Rees (DE); Albersmann, Josef, Dipl.-Ing., 48691 Vreden (DE)

(57) **Zusammenfassung**

Um ausreichend zufällige Zufallszahlen für Telekommunikationsgeräte eines drahtlosen Telekommunikationssystems zu erzeugen, werden Nutzdaten (SD) (z.B.Sprachdaten) ausgewertet. Aus diesen Nutzdaten (SD) wird z.B. ein Startwert (STW) für die Zufallszahlenerzeugung gebildet, der einem Zufallszahlengenerator (ZZG) zugeführt wird. Als Grundlage für die Zufallszahlenerzeugung können zusätzlich zu den Nutzdaten (SD) auch funkstreckenbezogene Daten (FSW) (z.B. Feldstärkewerte) und/oder auch systemspezifische Daten (ZW1, ZW2) (z.B. Zeitschlitz-/Zeitrahmenwerte) herangezogen werden.

## Beschreibung

Drahtlose Telekommunikationssysteme sind Nachrichtensysteme mit einer drahtlosen Übertragungsstrecke zwischen einer Nachrichtenquelle und einer Nachrichtensenke zur Nachrichtenverarbeitung und -übertragung, bei dem an jedem x-beliebigen Ort des Nachrichtensystems (mobiler Charakter des Nachrichtensystems) die Nachrichten in einer bevorzugten Übertragungsrichtung (Simplex-Betrieb) oder in beiden Übertragungsrichtungen (Duplex-Betrieb) übertragen werden. Die Nachrichtenverarbeitung kann dabei digital oder analog sein. Darüber hinaus erfolgt die Nachrichtenverarbeitung und die drahtlose Nachrichtenübertragung vorzugsweise nach diversen Funkstandards, wie DECT (**D**igital **E**uropean **C**ordless **T**elecommunication; vgl. **(1)**: Nachrichtentechnik Elektronik 42 (1992, Jan./Feb.), Nr. 1, Berlin, DE; U.Pilger: "Struktur des DECT-Standards", Seiten 23 bis 29; **(2)**: Philips Telecommunication Review, Vol. 49, Nr. 3, Sept. 1991; R.Mulder: "DECT Universal Cordless Access System", Seiten 68 bis 73;), WCPS (amerikanische DECT-Version), PAS (jap. DECT-Version), GSM einschließlich des Derivats DCS1800 (**G**roupe **S**péciale **M**obile oder **G**lobal **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152), ADC (amerikanische GSM-Version), JDC (japanische GSM-Version) etc. Als drahtlose Übertragungstechnik können neben der Funkübertragung auch andere drahtlose Übertragungsarten eingesetzt werden, wie z. B. die Infrarot-Übertragung.

"Nachricht" ist ein übergeordneter Begriff, der sowohl für den Sinngehalt (Information) als auch für die physikalische Repräsentation (Signal) steht. Signale können dabei z. B.
(1) Bilder,
(2) gesprochene Wörter,
(3) geschriebene Wörter,
(4) verschlüsselte Wörter oder Bilder
repräsentieren.

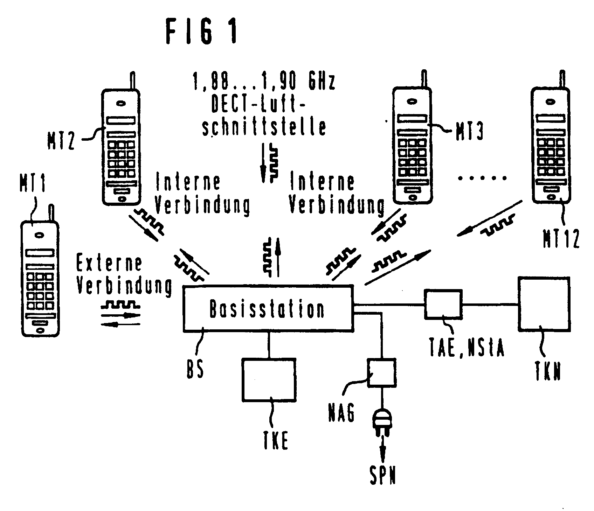

Drahtlose Telekommunikationssysteme der vorstehend umrissenen Art sind beispielsweise DECT-Systeme (**D**igital **E**uropean **C**orless **T**elecommunication; vgl. **(1):** Nachrichtentechnik Elektronik 42 (1992) Jan./Feb., Nr. 1, Berlin, DE; U. Pilger: "Struktur des DECT-Standards", Seiten 23 bis 29; **(2):** telcom Report 16 (1993) Nr. 1, J. H. Koch: "Digitaler Komfort für schnurlose Telekommunikation - DECT-Standard eröffnet neue Nutzungsgebiete", Seiten 26 und 27; **(3):** tec 2/93 - Das technische Magazin von Ascom "Wege zur universellen mobilen Telekommunikation", Seiten 35 bis 42) oder GAP-Systeme (**G**eneric **A**ccess **P**rofile; ETSI-Publikation prETS300444, April 1995, Final Draft, ETSI, FR), die beispielsweise gemäß der Darstellung in FIG 1 aufgebaut sein können.

Nach dem DECT/GAP-Standard können gemäß der Darstellung in FIG 1 an einer DECT/GAP-Basisstation BS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT/GAP-Mobilteilen MT1...MT12 aufgebaut werden. Die Zahl 12 ergibt sich aus einer Anzahl "k" von für den Duplexbetrieb eines DECT/GAP-Systems zur Verfügung stehenden Zeitschlitzen bzw. Telekommunikationskanälen (k = 12). Die Verbindung können dabei intern und/oder extern sein. Bei einer internen Verbindung können zwei an der Basisstation BS registrierte Mobilteile, z. B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z. B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27 - nur einen Anschluß zu der Telekommunikationsanschlußein-heit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z. B. das Mobilteil MT12, anstelle des Telekommunikationsendgerätes TKE den zweiten Anschluß für eine externe Verbindung nutzt. Während die Mobilteil MT1...MT12 mit einer Batterie oder einem Akkumulator betrieben werden; ist die als schnurlose Klein-Vermittlungsanlage ausgebildete Basisstation BS über ein Netzanschlußgerät NAG an ein Spannungsnetz SPN angeschlossen.

FIG 2 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstation BS und des Mobilteils MT. Dieser besteht aus einem Funkteil FKT, einer Signalverarbeitungseinheit SVE mit einem Signalsteuerungsteil SST und einem Singalumformungsteil SUT, einem Taktgenerator TG, einer als Mikrocontroller µC ausgebildeten Zentralen Steuerung ZS, einer Schnittstelle SS und einer Stromversorgung SV, die in der dargestellten Weise miteinander verbunden sind. Die prinzipielle Funktionsweise des Schaltungsaufbaus ist beispielsweise in der vorstehend zitierten Druckschrift Components 31 (1993), Heft 6, Seiten 215 bis 218 beschrieben.

Von den genannten Schaltungseinheiten sind das Signalsteuerungsteil SST und die Schnittstelle SS für die Basisstation BS und das Mobilteil MT unterschiedlich ausgebildet. Zur Kennzeichnung dieser Unterschiede sind die das Mobilteil MT betreffende Schaltungseinheiten eingeklammert "()".

Das Signalsteuerungsteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt.

Die Schnittstelle SS ist in der Basisstation BS als Leitungs-/BOF-Schnittstelle LBSS und in dem Mobilteil MT als BOF-Schnittstelle ausgebildet. Über die Leitungs-/BOF-Schnittstelle LBSS ist
a) die Basisstation BS an das, z.B. leitungsgebundene, Telekommunikationsnetz TKN angeschlossen und
b) eine gegebenenfalls vorhandene basisstationsspezifische Bedienoberfläche BS-BOF mit den übrigen Schaltungseinheiten der Basisstation BS verbunden.

Über die BOF-Schnittstelle BSS ist eine mobilteilspezifische Bedienoberfläche MT-BOF mit den übrigen Schaltungseinheiten des Mobilteils MT verbunden. Die basisstationsspezifische Bedienoberfläche BS-BOF und die mobilteilspezifische Bedienoberfläche MT-BOF weisen jeweils eine Tastatur TA, eine Anzeigeeinrichtung (Display) AE, ein Mikrofon MF, eine Hörkapsel HK und eine Tonrufklingel TRK auf.

In dem DECT-System nach FIG 1 müssen die systemimmanenten DECT-Geräte, das Schnurlos-Mobilteil MT und die Schnurlos-Basisstation BS, im Rahmen des DECT/GAP-Standards ein Paket von Standardprozeduren durchführen können. Zu diesem Paket gehören die basisstationsspezifischen Standardprozeduren "Authentifizierung des Mobilteils MT (**P**ortable **T**ermination PT)" und "Authentifizierung der Basisstation BS (**F**ixed **T**ermination FT)" sowie die mobilteilspezifischen bzw. basisstations- und mobilteilspezifischen Standardprozeduren "Authentifizierung des Benutzers" und "Tastenzuweisung" (engl.:Key Allocation). Diese in dem DECT-Standard (vgl. ETSI-Publikation ETS 300 175-5, Kap. 13.3, Okt. 1992 u. ETS 300 175-7, Kap. 4-6, insb. Kap. 4 iVm Figur 1, den Abschnitt 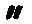 Vorwort" und den Abschnitt 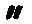 Einführung", Okt. 1992) als Mobility Management-Prozeduren bezeichneten Standardprozeduren sind Bestandteil des Sicherheitskonzeptes im GAP-Standard, ETSI-Publikation prETS 300 444, Kap. 8.23-8.25 und 8.32-8.34, April 1995, bei dem sich die Basisstation und das Mobilteil gegenseitig authentisieren. Darüber hinaus stehen die genannten Standardprozeduren in enger Beziehung zur Verschlüsselungseinheit im DECT-Standard (engl.:encryption unit). Um die genannten Standardprozeduren ausführen zu können, muß das DECT/GAP-Gerät in der Lage sein, eine Zufallszahl mit "n" Bits zu erzeugen.

Hierfür werden beispielsweise in den DECT-Geräten Generatoren für Pseudozufallszahlen benutzt, die z.B. durch die in dem Gerät implementierte Software realisiert werden. Diese Zufallszahlengeneratoren generieren nur dann zufällige Zahlen, wenn sie einen zufälligen Startwert (im DECT-Standard wird dieser Startwert mit "seed" bezeichnet) haben. Wird in den Zufallszahlengeneratoren immer der gleiche Startwert verwendet, so erhält man auch jeweils immer die gleiche Zufallszahlenfolge.

Bisher ist es üblich gewesen, daß beim Einschalten des DECT-Gerätes ein Zähler gestartet wird, der nach einer bestimmten Zeit immer wieder inkrementiert wird. Neben dem zusätzlichen Aufwand für Zählerinkrementierung hat die Methode den Nachteil, daß zu gleichen Zeitpunkten nach dem Einschalten immer die gleichen Zufallszahlen erzeugt werden. Dies ist besonders problematisch bei der direkt nach dem Einschalten des DECT-Gerätes durchgeführten basisstationsspezifischen Standardprozedur "Authentifizierung des Mobilteils MT", weil beispielsweise der Fall eintreten kann, daß zum Zeitpunkt der Erzeugung der Zufallszahlen jeweils die gleiche Zeitspanne seit dem Einschalten vergangen ist und daher die gleichen Zufallszahlen erzeugt werden.

Außerdem ist es bisher üblich gewesen, daß der Startwert aus dem Inhalt eines Registers in dem Mikrocontroller ermittelt wird. Da aber in diesen Registern des Mikrocontrollers auch Funktionsübergabeparameter und andere deterministische Werte stehen, sind diese Inhalte nicht ausreichend zufällig.

Weiterhin ist es aus dem GSM-Standard (**G**roupe **S**péciale **M**obile oder **G**lobal **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152) und nach diesem Standard entwickelten Mobilfunkgeräten bekannt, sowohl Zeitschlitz-/Zeitrahmeninformationen als auch in den Funknachrichten enthaltene funkstreckenbezogene Informationen für die Erzeugung von Zufallszahlen heranzuziehen.

Die der Erfindung zugrundeliegende Aufgabe besteht darin, ausreichend zufällige Zufallszahlen für Telekommunikationsgeräte eines drahtlosen Telekommunikationssystems zu erzeugen.

Diese Aufgabe wird durch die Merkmale des Patentanspruches 1 und durch die Merkmale des Patentanspruches 11 gelöst.

Die der Erfindung zugrundeliegende Idee besteht darin, daß - um ausreichend zufällige Zufallszahlen für Telekommunikationsgeräte eines drahtlosen Telekommunikationssystems zu erzeugen - Nutzdaten (z.B.Sprachdaten gemäß Ansprüche 2 und 11) ausgewertet werden.

Aus diesen Nutzdaten wird z.B. ein Startwert (Ansprüche 8 und 18) für die Zufallszahlenerzeugung gebildet, der einem Zufallszahlengenerator zugeführt wird.

Als Grundlage für die Zufallszahlenerzeugung können zusätzlich zu den Nutzdaten auch funkstreckenbezogene Daten gemäß den Ansprüchen 3, 4, 13 und 14 (z.B. Feldstärkewerte gemäß den Ansprüchen 5 und 15) und/oder auch systemspezifische Daten gemäß den Ansprüchen 3, 6, 13 und 16 (z.B. Zeischlitz-/Zeitrahmenwerte gemäß den Ansprüchen 7 und 17) herangezogen werden.

Weitere vorteilhafte Weiterbildungen der Erfindung sind in den übrigen Unteransprüchen angegeben.

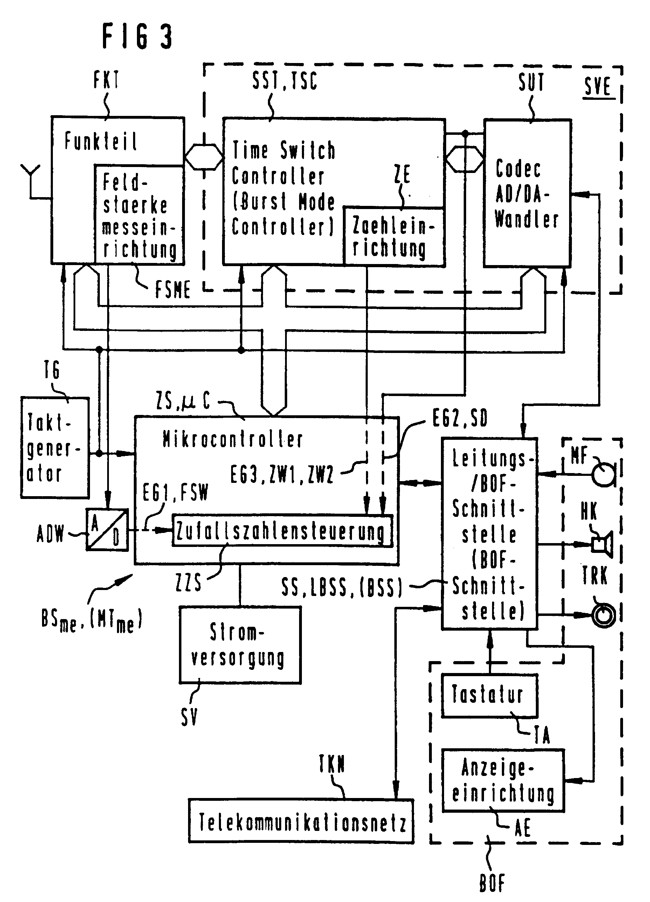

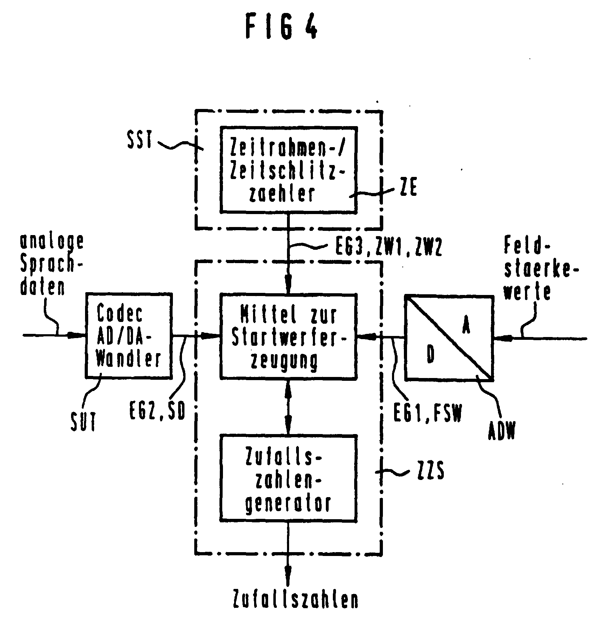

Ein Ausführungsbeispiel der Erfindung wird anhand der Figuren 3 und 4 erläutert. Es zeigen:
FIG 3 den prinzipillen Aufbau eines Schnurlostelefons, Schnurlos-Basisstation und Schnurlos-Mobilteil, mit einem Zufallszahlengenerator
FIG 4 den prinzipillen Aufbau des Zufallszahlengenerators nach FIG 3

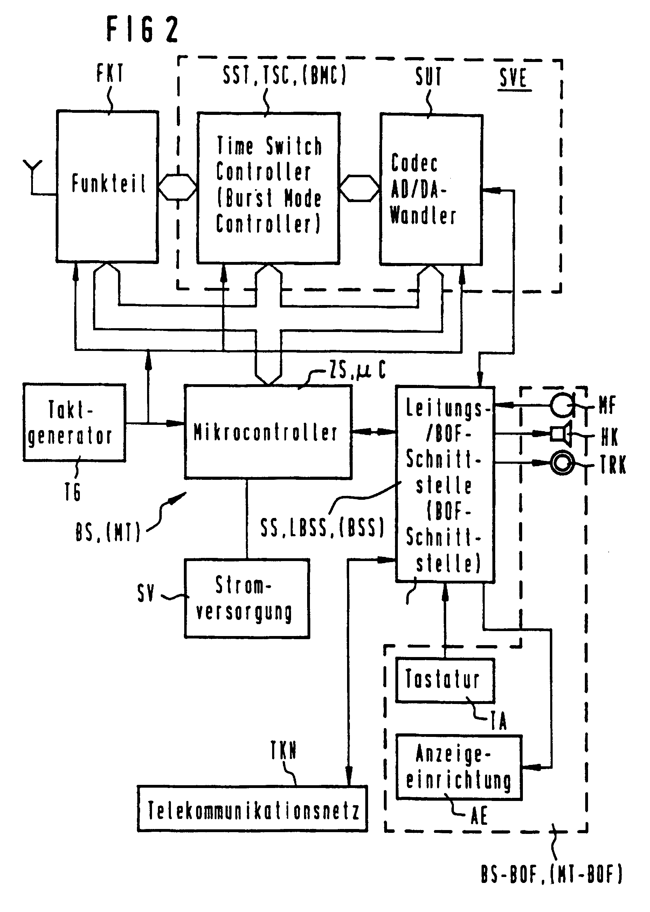

FIG 3 zeigt ausgehend von dem Schaltungsaufbau der Schnurlos-Basisstation BS und dem Schnurlos-Mobilteil MT nach FIG 2 den modifizierten erweiterten Schaltungsaufbau einer Schnurlos-Basisstation Bsₘₑ und einem Schnurlos-Mobilteil MTₘₑ. Die Schnurlos-Basisstation BSₘₑ und das Schnurlos-Mobilteil MTₘₑ weisen gegenüber der bekannten Basisstation BS und dem bekannten Mobilteil MT nach FIG 2 eine Zufallszahlensteuerung ZZS auf, die in der Zentralen Steuerung ZS integriert und implementiert ist. In dieser Zufallszahlensteuerung ZZS werden Zufallszahlen für die Durchführung der in der Beschreibungseinleitung erwähnten Standardprozeduren erzeugt. Die Erzeugung dieser Zufallszahlen erfolgt aufgrund von drei Eingangsgrößen, einer funkstreckenbehafteten ersten Eingangsgröße EG1, einer funknachrichtenbehafteten zweiten Eingangsgröße EG2 und einer systemspezifischen dritten Eingangsgröße EG3.

Die erste Eingangsgröße EG1 enthält digitale Feldstärkewerte FSW (**R**adio **S**ignal **S**trength **V**alues RSSV), die als analoge Signale in einer dem Funkteil FKT zugeordneten Feldstärkemeßeinrichtung FSME (**R**adio **S**ignal **S**trength **I**ndicator RSSI) gemessen und in einem Analog/Digitalwandler ADW durch Umwandlung der analogen Signale erzeugt werden.

Die zweite Eingangsgröße EG2 enthält digitale Sprachdaten SD, die als analoge Sprachdaten von der Schnittstelle SS und dem Funkteil FKT erfaßt und in der Signalverarbeitungseinheit SVE von dem Signalsteuerungsteil SST und dem Signalumformungsteil SUT aus den analogen Sprachdaten erzeugt werden.

Die dritte Eingangsgröße EG3 enthält einen ersten Zählerwert ZW1 und/oder einen zweiten Zählerwert ZW2, der/die in einer Zähleinrichtung ZE mit einem Zeitschlitzzähler und/oder einem Zeitrahmenzähler des Signalsteuerungsteils SST erzeugt werden. Die von der Zähleinrichtung ZE erzeugten Zählerwerte ZW1, ZW2 lassen sich bei dem vorliegenden DECT-spezifischen Schnurlostelefon BSₘₑ, MTₘₑ aus der DECT-spezifischen TDMA-Rahmenstruktur ableiten. Dabei wird selbst bei gleichen Zeitpunkten nach dem Einschalten ein unterschiedlicher Wert erzeugt, weil der Zeitschlitzzähler entsprechend der Kanalbelegung variieren wird

FIG 4 zeigt den Aufbau der Zufallszahlensteuerung ZZS. Die Zufallszahlensteuerung ZZS weist danach Mittel zur Startwerterzeugung MSE und einen Zufallszahlengenerator ZZG auf. Die Mittel zur Startwerterzeugung MSE bilden aus den Eingangsgrößen EG1...EG3 nach FIG 3 einen Startwert STW zur Erzeugung von Zufallszahlen, der dem Zufallszahlengenerator zugeführt wird. Der Zufallszahlengenerator ZZG erzeugt aus dem Startwert STW schließlich die für die Durchführung der in der Beschreibungseinleitung erläuterten Standardprozeduren benötigten Zufallszahlen.

## Patentansprüche

1. Verfahren zum Erzeugen von Zufallszahlen in Telekommunikationsgeräten eines drahtlosen Telekommunikationssystems mit folgendem Verfahrensmerkmal:
eine von dem Telekommunikationsgerät empfangene/gesendete Nutznachricht wird als ein erster Zufallszahlenparameter (EG2) in bezug auf Nutzdaten (SD) derart ausgewertet, daß mit den Nutzdaten (SD) die Zufallszahlen erzeugbar sind.

2. Verfahren nach Anspruch 1, **dadurch gekennzeichnet,** daß die Nutznachricht eine Sprachnachricht ist und die Nutzdaten (SD) Sprachdaten sind.

3. Verfahren nach Anspruch 1 oder 2, **dadurch gekennzeichnet,** daß zusätzlich zu dem ersten Zufallszahlenparameter (EG2) mindestens ein weiterer Zufallszahlenparameter (EG1, EG3) in bezug auf dem weiteren Zufallszahlenparameter immanente Daten (FSW, ZW1, ZW2) ausgewertet wird und daß die Zufallszahlen aus den Nutzdaten (SD) und den weiteren Daten (FSW, ZW1, ZW2) erzeugt werden.

4. Verfahren nach Anspruch 2, **dadurch gekennzeichnet,** daß eine von dem Telekommunikationsgerät empfangene Funkstreckeninformation als ein zweiter Zufallszahlenparameter (EG1) in bezug auf Funkstreckenwerte (FSW) ausgewertet wird.

5. Verfahren nach Anspruch 4, **dadurch gekennzeichnet,** daß die Funkstreckeninformation eine Feldstärkeinformation ist und die Funkstreckenwerte (FSW) Feldstärkewerte sind.

6. Verfahren nach Anspruch 3, 4 oder 5, **dadurch gekennzeichnet,** daß eine Systeminformation als ein dritter Zufallszahlenparameter (EG3) in bezug auf Systemwerte (ZW1, ZW2) ausgewertet wird.

7. Verfahren nach Anspruch 6, dadurch gekennzeichnet, daß die Systeminformation eine Zeitschlitz-/Zeitrahmeninformation ist und die Systemwerte (ZW1, ZW2) Zeitschlitz-/Zeitrahmenwerte sind.

8. Verfahren nach einem der Ansprüche 1 bis 7, **dadurch gekennzeichnet,** daß ein Startwert (STW) zum Erzeugen der Zufallszahlen aus den Nutzdaten (SD), den Funkstreckenwerten (FSW) und/oder den Systemwerten (ZW1, ZW2) ermittelt wird.

9. Verfahren nach einem der Ansprüche 1 bis 8, **dadurch gekennzeichnet,** daß ein DECT-/GAP-spezifisches, mindestens aus einer Zelle bestehendes Schnurlos-Tele-kommunikationssystem als drahtloses Telekommunikationssystem und ein DECT-/GAP-spezifisches Schnurlos-Mobilteil (MTₘₑ) als Telekommunikationsgerät verwendet werden.

10. Verfahren nach einem der Ansprüche 1 bis 9, **dadurch gekennzeichnet,** daß ein DECT-/GAP-spezifisches, mindestens aus einer Zelle bestehendes Schnurlos-Tele-kommunikationssystem als drahtloses Telekommunikationssystem und eine DECT-/GAP-spezifische Schnurlos-Basisstation (BSₘₑ) als Telekommunikationsgerät verwendet werden.

11. Anordnung zum Erzeugen von Zufallszahlen in Telekommunikationsgeräten eines drahtlosen Telekommunikationssystems, mit folgenden Anordnungsmerkmalen:
(a) erste Erfassungsmittel (SS, FKT), die derart ausgebildet sind, daß eine von dem Telekommunikationsgerät empfangene/gesendete Nutznachricht als ein erster Zufallszahlenparameter (EG2) erfaßt wird
(b) Auswertemittel (SUT, SST), die mit den ersten Erfassungsmitteln (SS, FKT) verbunden und derart ausgebildet sind, daß die empfangene/gesendete Nutznachricht in bezug auf Nutzdaten (SD) ausgewertet wird,
(c) Erzeugungsmittel (ZZS, MFE, ZZG), die mit den Auswertemitteln (SUT, SST) verbunden und derart ausgebildet sind, daß mit den Nutzdaten (SD) die Zufallszahlen erzeugbar sind.

12. Anordnung nach Anspruch 11, **dadurch gekennzeichnet,** daß die die Nutznachricht eine Sprachnachricht ist und die Nutzdaten (SD) Sprachdaten sind.

13. Anordnung nach Anspruch 11 oder 12, **dadurch gekennzeichnet,** daß
(a) weitere Erfassungsmittel (FKT) vorgesehen sind, die derart ausgebildet sind, daß zusätzlich zu dem ersten Zufallszahlenparameter (EG2) mindestens ein weiterer Zufallszahlenparameter (EG1, EG3) erfaßt wird,
weitere Auswertemittel (FSME, ADW, ZE) vorgesehen sind, die derart ausgebildet sind, daß der/die weitere/n Zufallszahlenparameter (EG1, EG3) in bezug auf dem/den weiteren Zufallszahlenparameter immanente Daten (FSW, ZW1, ZW2) ausgewertet wird/werden.

14. Anordnung nach Anspruch 13, **dadurch gekennzeichnet,** daß
(a) zweite Erfassungsmittel (FKT) vorgesehen sind, die derart ausgebildet sind, daß eine von dem Telekommunikationsgerät empfangene Funkstreckeninformation als ein zweiter Zufallszahlenparameter (EG1) erfaßt wird,
(b) zweite Auswertemittel (FSME, ADW) vorgesehen sind, die derart ausgebildet sind, daß die Funkstreckeninformation in bezug auf Funkstreckenwerte (FSW) ausgewertet wird.

15. Anordnung nach Anspruch 14, dadurch gekennzeichnet, daß die Funkstreckeninformation eine Feldstärkeinformation ist und die Funkstreckenwerte (FSW) Feldstärkewerte sind.

16. Anordnung nach Anspruch 13, 14 oder 15, **dadurch gekennzeichnet,** daß
(a) dritte Erfassungsmittel (FKT) vorgesehen sind, die derart ausgebildet sind, daß eine von dem Telekommunikationsgerät empfangene Systeminformation als ein dritter Zufallszahlenparameter (EG3) erfaßt wird,
(b) dritte Auswertemittel (ZE) vorgesehen sind, die derart ausgebildet sind, daß die Systeminformation in bezug auf Systemwerte (ZW1, ZW2) ausgewertet wird.

17. Anordnung nach Anspruch 16, dadurch gekennzeichnet, daß die Systeminformation eine Zeitschlitz-/Zeitrahmeninformation ist und die Systemwerte (ZW1, ZW2) Zeitschlitz-/Zeitrahmenwerte sind.

18. Anordnung nach einem der Ansprüche 11 bis 17, **dadurch gekennzeichnet,** daß die Erzeugungsmittel (ZZS, MFE, ZZG) derart ausgebildet sind, daß aus den Nutzdaten (SD), den Funkstreckenwerten (FSW) und/oder den Systemwerten (ZW1, ZW2) ein Startwert (STW) zum Erzeugen der Zufallszahlen ermittelt wird.

19. Anordnung nach einem der Ansprüche 11 bis 18, **dadurch gekennzeichnet,** daß das drahtlose Telekommunikationssystem als ein DECT-spezifisches/GAP-spezifisches, mindestens aus einer Zelle bestehendes Schnurlos-Telekommunikationssystem und das Telekommunikationsgerät als ein DECT-/GAP-spezifisches Schnurlos-Mobilteil (MTₘₑ) ausgebildet sind.

20. Anordnung nach einem der Ansprüche 11 bis 19, **dadurch gekennzeichnet,** daß das drahtlose Telekommunikationssystem als ein DECT-spezifisches/GAP-spezifisches, mindestens aus einer Zelle bestehendes Schnurlos-Telekommunikationssystem und das Telekommunikationsgerät als eine DECT-/GAP-spezifische Schnurlos-Basisstation (BSₘₑ) als Telekommunikationsgerät ausgebildet sind.
